# EUROPEAN PATENT APPLICATION

(11) **EP 2 727 855 A1**
(43) Date of publication of application: **07.05.2014**
(21) Application number: 13169893.8
(22) Date of filing: 30.05.2013
(51) Int. Cl.: B65D 81/26, B29C 43/20, B29C 51/14, B29C 43/14, B29C 43/52, B29C 33/10, B29C 51/40, B29C 43/36

(54) **Food tray and method for obtaining the same**

(30) Priority: 04.06.2012 IT MI20120963; 04.06.2012 IT MI20120962
(71) Applicant: MAGIC PACK S.R.L., 26030 Gadesco Pieve Delmona (CR) (IT)
(72) Inventor: Florio Biasio, Natale, I-26030 Gadesco Pieve Delmona, Cremona (IT); Bernini, Fabrizio, I-26030 Gadesco Pieve Delmona, Cremona (IT); Labinella, Battista, I-26030 Gadesco Pieve Delmona, Cremona (IT)
(74) Representative: Long, Giorgio

(57) **Abstract**

The present invention relates to a food tray, in particular of the type made of a foamed material and intended to be closed by a protective film.

In particular, the present invention relates to a method for sealing the peripheral edge (4) of a food tray (1), said tray (1) comprising an open-cell polystyrene foam intermediate layer (5) and at least one outer weldable material layer (8), said method comprising a first pressurized thermosealing step, followed in sequence by a second pressurized cooling step. An apparatus specifically devised for such method is also described.

## Description

The present invention relates to a food tray suitable for packaging in a protective atmosphere top-seal system, capable of absorbing fluids expelled by the same food, without using additional absorbing materials; in particular, of the type made of a draining polystyrene foam and intended to be closed by a barrier film.

The present invention also relates to a mould for manufacturing food trays and a method for obtaining the tray as defined above.

Food trays in draining foamed material have been long used in the packaging field, in particular for packaging meat or fish. The material used for this kind of trays is generally composed of a composite sheet made of an inner layer in polystyrene foam with essentially open cells, and two outer layers in polystyrene foam with essentially closed cells. The outer layer intended to contact the food, i.e., the one facing inwardly of the tray, is typically perforated, so as to create a plurality of channels connecting the surface with the open-cell polystyrene foam core. In fact, the meat or fish tend to release fluids during their shelf life, hence it is important that such fluids are drained and absorbed by the open-cell polystyrene foam inner layer. In this manner, the interior of the package is substantially clean and dry. The above-described containers, as they do nothave barrier characteristics, are mainly used with an extensible film, in particular PVC or PE, which completely wraps them with the product. This is a pre-wrapping for the physical and hygienic protection of food and which does not produce any significant increase of the shelf life, the period of time that a food can be sold and consumed in compliance with the organoleptic characteristics and within the limits provided by the law.

In order to prolong as much as possible the shelf life of fresh products, in particular meat or fish, a technique providing for a packaging in a protective atmosphere (M.A.P.), typically, an atmosphere composed of a variable mixture of oxygen, carbon dioxide, nitrogen, has become more and more widespread. Therefore, the package has to be airtight, and with the gas barrier characteristics listed above. In particular, in the case of the polystyrene foam container, it is composed of a sheet of said material, to which a film with gas barrier characteristics is applied, so as to obtain an integral structure. During the food packaging step, after the injection of the protective gas, a "top" film, again having such gas barrier characteristics, is welded on the container edge, as to obtain an airtight package thus preventing the escape of the inner gas mixture and the gradual replacement thereof with external air. Therefore, the food remains in contact with the protective atmosphere throughout its shelf life, which however, at this point, is prolonged compared to the same pre-wrapped product.

The container described above does not have any draining capabilities, however, the possible use of a polystyrene foam draining sheet, on which a film with gas barrier characteristics may be applied, would not be efficient. In fact, having to perform a total or partial drilling of the inner surface for absorbing liquids, there would also be a complete escape of the protective gas, since the polystyrene foam does not have any gas barrier characteristics.

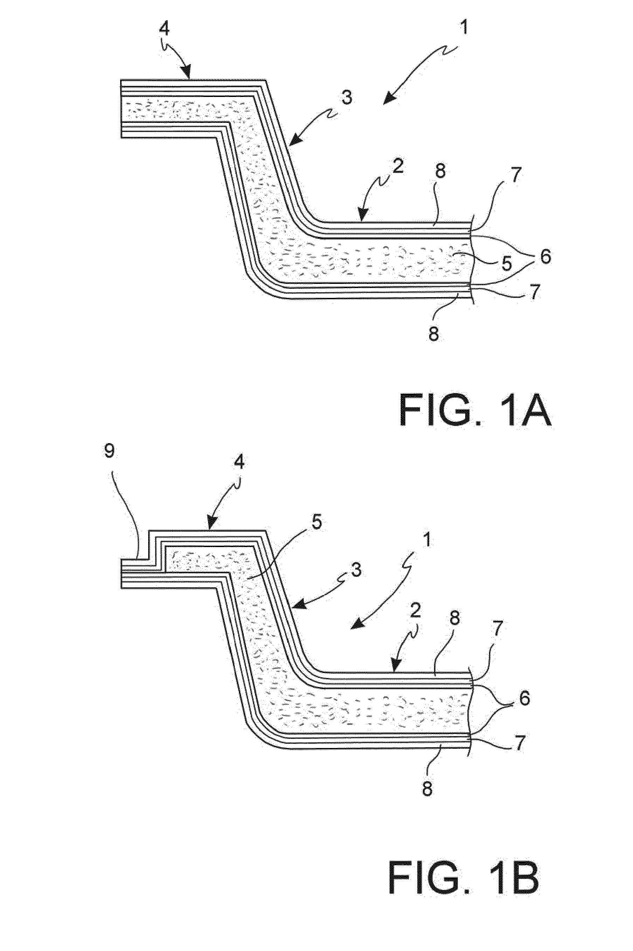

Therefore, the need shall be apparent to use the barrier film on the external part as well. Although the two barrier films prevent the gas passage, however, an important escape passage for the protective atmosphere remains, which is represented by the same tray edge; in fact, since the gas cannot escape from the container outer surface, being the latter protected by the barrier film, it runs the entire inner part of the sheet, until reaching the escape passage exactly in the proximity of the edge, where the polystyrene foam sheet is in direct contact with the external air (see Fig. 1A).

In order to obviate this drawback, a solution is known which, by a collapse or localized welding of the material on the tray bottom plane, allows obtaining a portion of material that, subject to a drilling within the sealed frame, allows to absorb a possible exudate in that area. The limit of the solution is given by the fact that the absorbing area is considerably reduced. The inevitable increase in the production costs for such implementation, hence of the selling price, could not be justified by the absorbance efficiency thereof.

In order to obviate this drawback and to use a more extended drilling of the bottom and above all without absorbance limits, another solution is known, which allows coating the air-exposed edge with a plastic material frame that is integral to the outer barrier film and with welding characteristics, thus creating a solution of continuity between the outer barrier film, the welding edge, and the film top. However, this solution turns out to be not very efficient in terms of an industrial production; therefore, it turns out to be also very expensive.

More recently, a sealing technique for an edge of a tray in draining polystyrene foam was proposed, which provides for the combined use of pressure and radiofrequencies. However, in this case also, the problem initially felt is not solved in an optimal manner, since the radiofrequencies cause a thinning at the welding point such that the end seal is made unstable. The thickness decrease by collapse of the material, in fact, causes a drastic reduction of the total thickness thereof, then making the final sealing in the packaging line less effective under the action of the pressure decrease of the sealing mould, being the latter calibrated for traditional containers top seal, with a leakage risk of the protective atmosphere and a decrease of the food shelf-life. Furthermore, the thin edge also becomes very flexible, thus tending to be lifted under the action of the shrinkage of the package closure film, making the end package weaker and also less aesthetically pleasant.

Therefore, an object of the invention is to provide a tray with a sealed edge allowing the successive precise and durable welding of a package closure protective film for use in a protective atmosphere.

A further object of the invention is a method for manufacturing a tray as defined above that is convenient and cost-effective.

These and other objects are achieved by a tray and a method for the manufacturing thereof as set forth in the appended claims, the definitions of which are an integral part of the present description.

Further characteristics and the advantages of the present invention will be more apparent from the following description of some embodiments, given by way of non-limiting example only, in which:

Figs. 1A and 1B represent a sectional view of a detail of a food tray, before and after welding the edge, respectively;

Figs. 2A and 2B represent a sectional view of a particular of a mould for welding a tray edge, in a first embodiment, in two different operative conditions;

Figs. 3A and 3B represent a sectional view of a particular of a mould for welding a tray edge, in a second embodiment, in two different operative conditions;

Figs. 4A and 4B represent a sectional view of a particular of a mould for welding a tray edge, in a third embodiment, in two different operative conditions;

Fig. 5 represents a sectional view of a mould for welding a tray edge in a different embodiment;

Fig. 6 represents a perspective view of an apparatus for welding a tray edge in an embodiment of the invention;

Fig. 7 represents a schematic plane view of a second embodiment of an apparatus for welding a tray edge;

Fig. 8 represents a perspective view of a detail of the apparatus of Fig. 7;

Fig. 9 represents a further enlarged perspective view of the detail of Fig. 8;

Fig. 10 represents a perspective view of a different detail of the apparatus of Fig. 7;

Fig. 11 represents a sectional view of a mould for welding a tray edge according to the invention, in a first operative condition;

Fig. 12 represents a sectional view of the mould of Fig. 11, in a second operative condition;

Fig. 13 represents a sectional side view of a detail of a tray according to the invention;

Fig. 14 represents a perspective view of a detail of the support mould of the invention according to a particular embodiment;

Fig. 15 represents a perspective view of the press plate of the invention according to a particular embodiment;

Fig. 15A represents a perspective view of a detail of the press plate of Fig. 15;

Fig. 16 represents a perspective view of the press plate of Fig. 15 in a different operative condition.

With reference to the Figs. 1A and 1B, a food tray used for the objects of the present invention, indicated by the numeral 1, comprises a bottom 2, containment side walls 3, extending upwardly from the bottom 2 and having a typically flared shape, and a peripheral edge 4 extending outwardly from the upper end of the side walls 3, on a plane substantially parallel to the bottom 2 plane.

The material of which the tray 1 is made is conventionally a multilayer comprising an open-cell polystyrene foam intermediate layer 5, on the two faces of which there are arranged:
- a layer 6 of a material compatible with said polystyrene foam layer, for example, non-foamed polystyrene;
- a layer 7 of a material with gas barrier properties, arranged in contact with said layer 6 of material compatible with polystyrene foam, for example, ethylene vinyl alcohol (EVOH);
- an outer layer 8 of a weldable material arranged in contact with said layer 7 of a material with barrier properties, selected for example from polyethylene (PE).

The method of the invention provides to create a sealing along the entire peripheral edge 4 of the tray 1, so as to obtain a collapsed portion 9 of the edge material. Such collapsed portion 9 comprises only a portion of the peripheral edge 4, so as to leave the remaining portion of the peripheral edge 4 unaltered, hence available to receive a protective film welding, typically a film with gas barrier properties, which is composed of a polyethylene welding layer, a EVOH barrier layer, and a polyester layer, upon packaging.

By the term "collapsed portion", it is meant a portion of the peripheral edge 4 in which the open-cell polystyrene foam intermediate layer 5 collapses by softening, thus creating a single structure packed with the layers 6. Such collapsed portion 9 will typically have a thickness ranging between 0.3 and 0.7 mm, preferably between 0.4 and 0.6 mm.

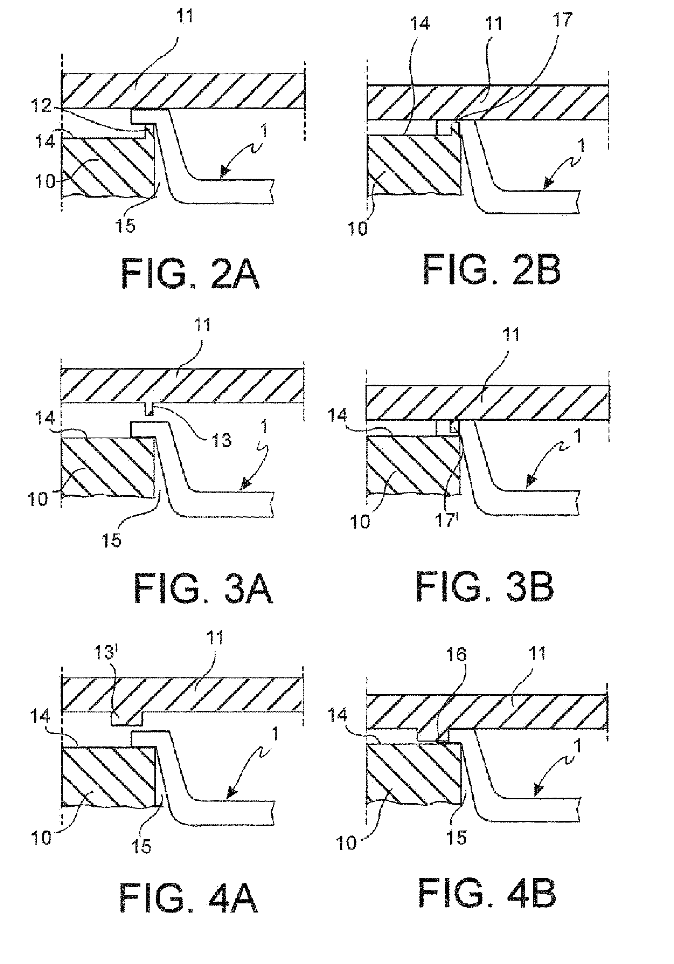

In Fig. 1B, the peripheral edge 4 carrying a collapsed portion 9 according to the embodiment of the inventive method of the Figs. 4A and 4B is shown.

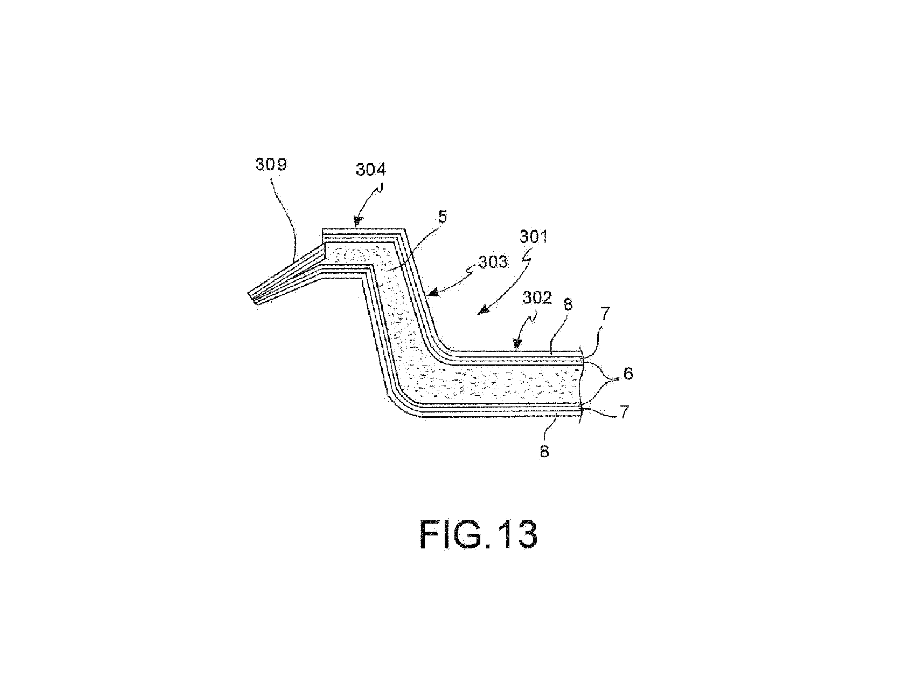

In an embodiment of the invention, shown in Fig. 13, the peripheral edge 304 of the tray 301 has a width that ranges between 9 and 11 mm, preferably about 10 mm, as measured on the undercut side. The width of the peripheral edge 304 is 50-80% more than the typical width of an edge in conventional trays, which is typically of about 6 mm. This allows obtaining the above-mentioned collapsed portion 9 without sacrificing the width of the non-collapsed remaining portion. In this manner, a large surface is kept available for the final welding of the protective film during the packaging of the food product.

Furthermore, the collapsed portion 309 is folded downwardly relative to the plane wherein the peripheral edge 304 lays. This allows avoiding that the collapsed portion 309, due to its flexibility and intrinsic inclination to face upwardly when it is pressed, as well as to its largeer width, interferes with both the cutting operation of the tray from the sheet of material of which it has been made, and the welding of the above-mentioned protective film, as it will be explained herein below.

The collapsed portion 309 has a percent area ranging between 20% and 40%, or between 25% and 35%, or about 30% of the total area of the peripheral edge 304, as measured on the undercut side.

According to an embodiment, the method according to the present invention provides a first pressurized thermosealing step, followed in sequence by a second pressurized cooling step. According to an embodiment, in this step the tray bottom plane is drilled, through special needle drilling devices. Alternatively, a drilling may occur, for example, in a successive step.

The first pressurized thermosealing step provides the following steps:
a) arranging the tray 1 in a heated support mould 10;
b) compressing a portion of the peripheral edge 4 by a heated press plate 11 for a preset time and at a preset pressure such as to make the material of said intermediate layer 5 reaching its softening temperature;
c) removing the tray 1 from said support mould 10.

The support mould 10 comprises an upper surface 14, intended to support the peripheral edge 4 of the tray 1, and a cavity 15, intended to house the remaining part of the tray 1.

The support mould 10 or the press plate 11 has a compression profile 12, 13, 13'.

In the embodiment of the Figs. 2A and 2B, the compression profile 12 is arranged on the upper surface 14 of the support mould 10, preferably at the inner rim thereof, and it has a width that is less than that of the peripheral edge 4 of the tray 1. In this manner, as shown in Fig. 2B, the compression profile 12, also heated as the entire mould is, carries out the thermosealing from the bottom of an inner portion of the peripheral edge 4 of the tray 1, leaving the outermost portion of the same edge unaltered.

In the embodiment of the Figs. 3A and 3B, on the other hand, the compression profile 13 is located on the lower surface of the press plate 11, in alignment with the inner rim of the support mould 10, and it has a width that is less than that of the peripheral edge 4 of the tray 1. In this manner, as shown in Fig. 3B, since both the press plate 11 and the support mould 10 are heated, the compression profile 13 carries out the thermosealing from above of an inner portion of the peripheral edge 4 of the tray 1, leaving the outermost portion of the same edge unaltered. Essentially, the collapsed portion 9 of the peripheral edge 4 of the tray 1 corresponds in this case to the one obtained according to the previous embodiment, with the only difference that the sealing has been carried out on the upper surface rather than on the lower one.

Also in the embodiment shown in the Figs. 4A and 4B, the thermosealing is actuated top-down, arranging the compression profile 13' on the lower face of the press plate 11. However, in this case the compression profile 13' is arranged above the upper surface 14 of the support mould 10, in a recessed position relative to the inner rim thereof. In this manner, the compression profile 13' carries out a thermosealing of the end portion of the peripheral edge 4 of the tray 1, as shown in Fig. 4B.

Therefore, as pointed out above, it is possible to obtain a tray 1 having a peripheral edge 4 comprising a collapsed portion 9, wherein said collapsed portion 9 is an end portion 16 or an inner portion 17, 17'.

The area of the collapsed portion 9 generally ranges between 20% and 40%, preferably between 25% and 35%, more preferably about 30% of the total area of the peripheral edge 4, as measured on the undercut side.

The collapsed portion 9 can be further obtained by thermosealing top-down or bottom-up.

In a preferred embodiment, the collapsed portion 9 will be an end portion of the peripheral edge 4.

The softening or melting temperature of the material of the intermediate layer 5 typically ranges between 95° C and 110° C. Therefore, the temperature of the support mould 10 and of the press plate 11, as well as the times of retention under pressure of the tray 1 in said mould 10, i.e., the sealing time, will be adjusted in order to obtain a quick increase of the inner temperature of the material to the values indicated above.

The pressure which the portion of peripheral edge 4 of the tray 1 is subjected to during the step b) of the method generally ranges between 40 and 90 kg/cm². However, it is not excluded that it is also possible to operate outside such range, provided that the temperature of the support mould 10 and of the press plate 11 is suitably adjusted. In fact, too high a temperature in the presence of a high pressure could cause a breakage of the peripheral edge 4 at the contact point. Vice versa, by operating with low pressures and low temperatures, a suitable collapse of the material, hence a welding functional to the aims of the invention, would not be obtained. In fact, if the intermediate layer 5 material does not collapse suitably, its gas passage tightness along the edge is compromised.

Generally, the support mould 10 and the press plate 11 temperature will range between 110° C and 150°, preferably between 130° C and 140° C; while the sealing time will range between 1 and 6 seconds, preferably 3-4 seconds.

The support mould 10 and the press plate 11 can be heated by technical devices known to those skilled in the art. For example, they can comprise electric resistors therein, connected to thermostats to set the temperature at the preset value.

In an embodiment, the surface of the support mould 10, at least in the portion intended to contact the edge 4 of the tray 1, is coated with a non-adherent material, for example, teflon.

The second pressurized cooling step is carried out immediately after the pressurized thermosealing step and comprises the following steps: a1) arranging the tray 1 that underwent said first pressurized thermosealing step in a cooling mould; b1) cold pressing the peripheral edge 4 of the tray 1 for a preset time and at such a pressure as to quickly cooling and stretching said peripheral edge 4; c1) removing said tray 1 from said cooling mould.

The cold pressing step b1) occurs by means of moulds that are similar to those described above for thermosealing, even if the above-mentioned pressing profiles 12, 13, 13' can be omitted, i.e., the moulds will typically have smooth contact surfaces with the edge 4 of the tray 1. Such moulds comprise an inner cooling water circuit at a temperature typically ranging between 8° C and room temperature, so as to cause a quick cooling of the surface of the tray edge 4. In fact, it is important that the edge 4 temperature is lowered as quickly as possible, by at least 10° C below the melting or softening temperature of polystyrene.

To this aim, also the pressure to which the edge 4 is subjected during the step b1) is important. Such pressure, in a preferred embodiment, will range between 10 and 40 kg/cm², more preferably between 20 and 30 kg/cm².

In an embodiment, during the cold pressing step b1), also the drilling of the bottom tray 2 will take place, by means of suitable drilling means - typically needles - arranged on the contact surface of the press plate with the tray bottom 2.

In an embodiment, the pressurized treatment time in step b1) ranges between 1 and 5 seconds, preferably between 2 and 3 seconds. This time ensures proper cooling the edge 4, while not compromising the manufacturing productivity thereof. Of course, longer times will be technically possible, even if they are not favorable from a production viewpoint.

The cooling step is crucial to the aims of the method of the present invention, since, as the tray 1 exits the thermosealing step, the edge 4 thereof seems wrinkled, hence susceptible to the problems highlighted in the introductory part of the present description relating to the welding of the protective film of the end package. Vice versa, the quick pressurized cooling or "quenching" of the edge 4 in the present step b1) of the method allows "stretching" the edge 4, thus considerably improving its surface properties to the aims of a proper welding of the protective film.

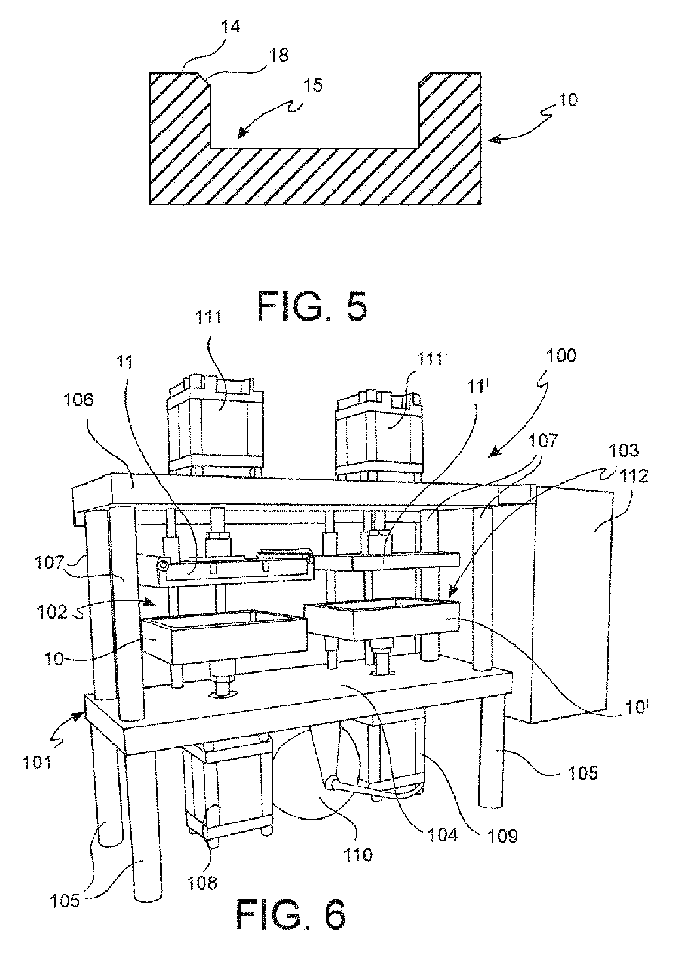

In the embodiment shown in Fig. 5, the support mould 10 has a bevel 18 at the edge between the upper surface 14 and the cavity 15. Such bevel 18 allows avoiding an undue thinning of the edge 4 portion of the tray 1 that is not pressed by the compression profile 12, 13, 13' during the step b) of the method. This tends to avoid an undue deflection of the edge 4 compared to an optimal situation of parallelism with the bottom 2 of the tray 1.

Examples of apparatuses that may be used for the method of the present invention will be now described.

A first embodiment is shown in Fig. 6.

Such apparatus, generally indicated by the numeral 100, comprises a frame 101 on which an operative hot mould-pressing unit 102 is secured, and an operative cold mould-pressing unit 103, for carrying out the steps b) and b1) of the method, respectively.

The frame 101 comprises a support platform 104 resting on the ground by means of legs 105, above which a table 106 is arranged at a preset distance, which is defined by spacer bars 107.

The platform 104 houses a first support mould 10, belonging to said hot mould-pressing unit 102, and a second support mould 10', belonging to said cold mould-pressing unit 103.

The first support mould 10 is operatively connected to heating means 108 arranged below the support platform 104, while the second support mould 10' is operatively connected to cooling means 109, also arranged below the platform 104. The cooling means 109 are connected to a cooling water reservoir 110.

A first press plate 11, belonging to said hot mould-pressing unit 102, and a second press plate 11', belonging to said cold mould-pressing unit 103 are suspended to the table 106.

The second press plate 11' comprises a plurality of needle elements (not shown) facing downwardly, for drilling the tray bottom 2.

The above-mentioned press plates 11, 11' are operatively connected to respective first and second pressurizing means 111, 111'. The first pressurizing means 111 also comprise heating means for the press plate 11.

The apparatus is completed by a control panel 112 that allows setting the temperature and pressure of the mould-pressing units 102, 103 and that allows driving the pressing operations of the steps b) and b1) and the relative treatment times.

The apparatus 100 operates as follows.

A tray 1 is manually inserted in the first support mould 10. Then, the hot mould-pressing unit 102 is actuated for the preset time. The tray is then immediately transferred to the second support mould 10', where the cold mould-pressing unit 103 is actuated for the time necessary to obtain the quenching of the edge 4 of the tray 1. At the same time, the bottom 2 of the tray is perforated. At the end of such operation, the tray is removed and the process can start again on another tray.

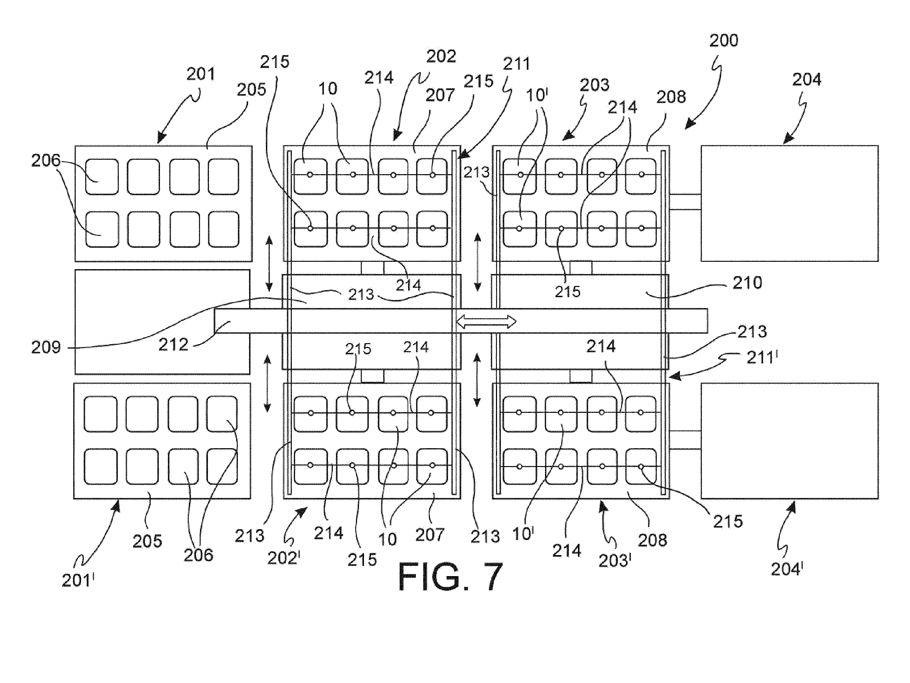

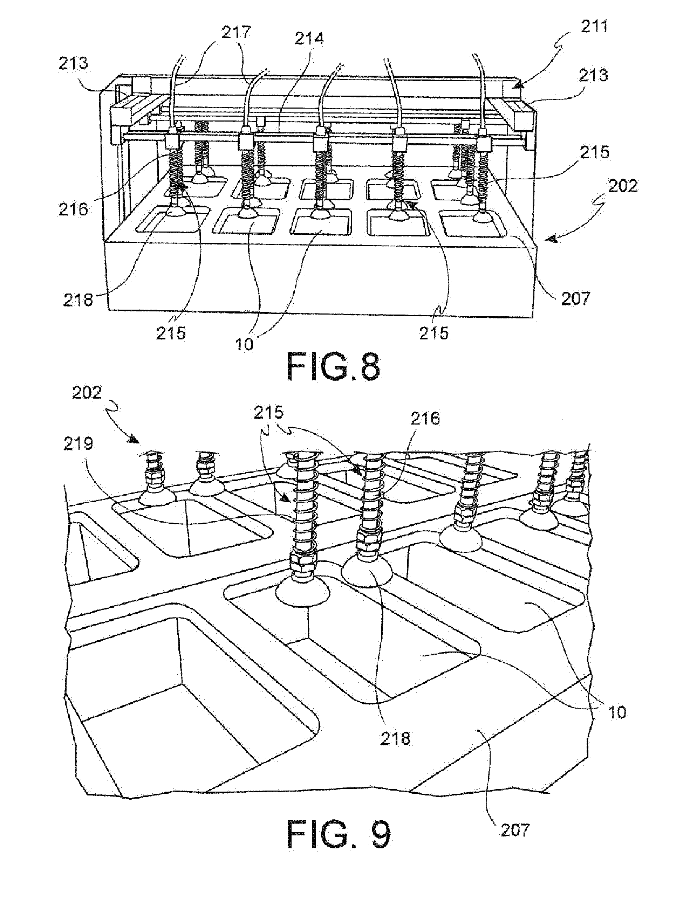

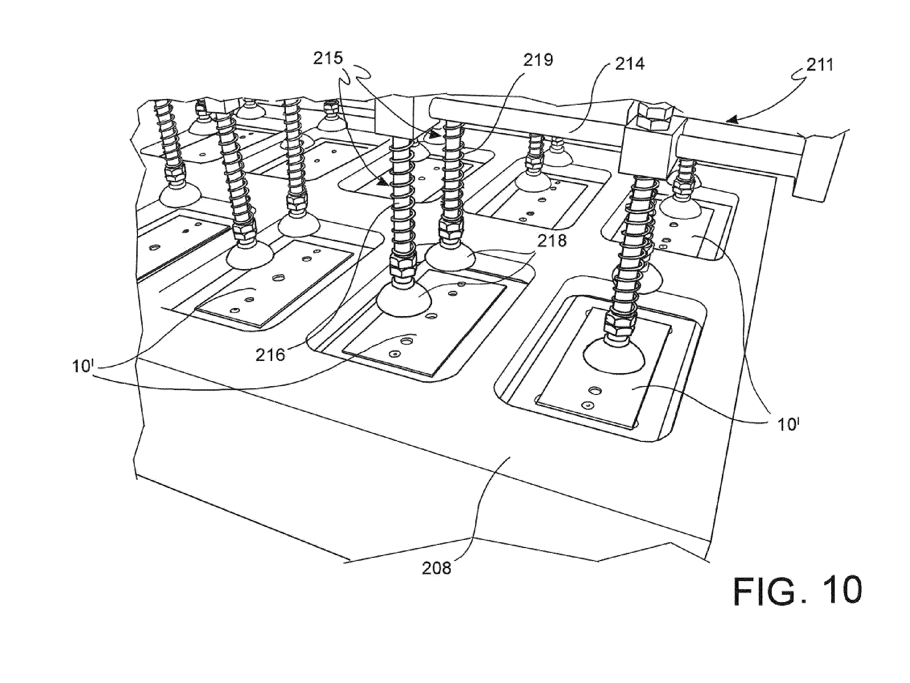

A second embodiment of the apparatus of the invention is shown in the Figs 7 to 10.

The apparatus 200 comprises a pair of loading stations 201, 201' of the trays 1, a pair of hot mould-pressing stations 202, 202', a pair of cold mould-pressing stations 203, 203', and a pair of unloading stations 204, 204', so as to define two parallel treatment paths of the trays 1. The mould-pressing stations 202, 202', 203, 203' comprise the operative units of the apparatus.

Each of the loading stations 201, 201' comprises a table 205 having a plurality of indents 206 sized to house the trays 1 and to support them along the respective edge 4.

Instead, each of the unloading stations 204, 204' can be composed simply of a support table, a container, or another collection means of the treated trays 1.

Each of the hot mould-pressing stations 202, 202' comprises a table 207 having a plurality of support moulds 10 as defined above, connected to respective heating means, for example, an electric resistor.

Similarly, each of the cold mould-pressing stations 203, 203' comprises a table 208 housing a plurality of support moulds 10' as defined above, which instead will be connected to suitable cooling means, for example, a cooling water recirculation circuit.

The tables 207, 208 of each pair of said mould-pressing stations 202, 202', 203, 203' are mounted on respective slides (not shown) that allow their transversal handling relative to said treatment paths of the trays 1, as shown by the arrows in Fig. 7. Such handling occurs by virtue of a suitable motorization.

Fixed pressing means 209, 210 are arranged in the intermediate position between the two tables 207, 208 of each of the pairs of mould-pressing stations 202, 202', 203, 203'. Each of said pressing means 209, 210 comprises respectively a plurality of press plates 11, 11' as defined above, as many as the support moulds 10, 10' are. In this manner, and by virtue of the transversal handling of the tables 207, 208, the support moulds 10, 10' of a table 207, 208 will be under the respective pressing means 209, 210, thus in a pressing position, while the ones of the table 207, 208 of the twins station will be in the outer position shown by the figures, thus in the loading-unloading position of the trays 1.

The pressing means 209 of the hot mould-pressing stations 202, 202' comprise in turn heating means of the press plates 11.

The apparatus 200 comprises first and second handling means 211, 211' of the trays 1.

The handling means 211, 211' are mounted on a slide 212, or a similar handling system, by means of transversal arms 213 extending up to above the tables 207, 208; therefore, they move integrally thereto in the longitudinal direction, i.e., along the treatment path of the trays 1, as shown by the large arrow in Fig. 7. Furthermore, the handling means can be translated vertically between a spaced position relative to the trays 1 in the support moulds 10, 10' and a contact and gripping position of said trays 1.

. Each pair of arms 213 is connected by longitudinal bars 214 carrying a plurality of gripping members 215, arranged above and at each of the support moulds 10, 10' of both mould-pressing stations 202, 202', 203, 203'.

The gripping members 215 are composed of at least one tubular element 216 connected to vacuum means by suitable pipe 217. In the example shown in the Figures, two tubular elements 216 are arranged for each tray 1.

Each tubular element 216 ends at its lower end with a bell 218 intended to contact the surface of the tray 1, in particular the bottom 2 thereof. The tubular element 216 is further retractile, and it can be returned to the extended position by suitable elastic means 219, for example, a helicoidal spring arranged about the tubular element 216. In this manner, damaging the tray 1 during the gripping operation is avoided.

The apparatus 200 is completed by a driving and control unit, which allows setting, adjusting, and controlling the temperature, pressure, and service times, and which allows performing automatically or manually the various steps of the sealing operation of the edges 4 of the trays 1.

The operation of the apparatus 200 is as follows.

The trays 1 are arranged in the special indents 206 of the table 205 of a loading station 201, manually or by means of a suitable automation (not shown), then the apparatus is turned on.

Then the handling means 211 are brought on the table 205 of the loading station 201, they are lowered until contacting the bells 218 with the bottom 2 of the trays 1, then by means of vacuum, the trays 1 are picked up by the gripping members 215. The handling means 211 are then lifted and brought upon the first hot mould-pressing station 202, where they will be released into the relative support moulds 10 by stopping the suction by the gripping members 215. At the same time, the handling means 211', integral to the means 211, have repeated the same sequence of operations between the hot mould-pressing station 202 and the cold mould-pressing station 203.

When the trays 1 picked up from the loading station 201 have been laid down in the hot mould-pressing station 202, the table 207 is translated beneath the pressing means 209, where the first thermosealing step b) of the edge 4 of the trays 1 occurs. Upon completion of such treatment, the table 207 is brought back to the initial outer position, and the handling means 211 pick up the treated trays 1 and lay them down in the special moulds 10' of the cold mould-pressing station 203. At this moment, the table 208 is brought under the relative pressing means 210, where the cooling step of the edge 4 of the trays 1 according to the step b1) of the method occurs.

Subsequently, the seconds handling means 211' pick up the trays 1 processed in the cold mould-pressing station 203 and lay them down in the unloading station 204.

Processing along the second treatment path - defined by the loading stations 201', the hot mould-pressing station 202', the cold mould-pressing station 203', and the unloading station 204' - occurs in offset times relative to the first treatment path described above, so that, when the tables 207, 208 of a mould-pressing station 202, 203 are under the pressing means 209, 210, the respective tables 207, 208 of the twin stations 202', 203' are external, so as to allow handling the trays 1, and vice versa. This is allowed by the transversal handling of the tables 207, 208 described before.

Therefore, the first and second handling means 211, 211' move in pairs between the loading stations 201, 201' and the unloading stations 204, 204', with intermediate passages at the mould-pressing stations 202, 202' and 203, 203'.

As it should be apparent from what has been stated, the operations are planned so as to maximize productivity and to reduce the downtimes.

Therefore, by the method described above trays 1 with a suitable sealed edge 4 are obtained, so as to prevent a gas exchange with the outside. At the same time, the sealed edge 4 has a surface that is sufficiently homogeneous to ensure an efficient successive welding of a barrier film of the package.

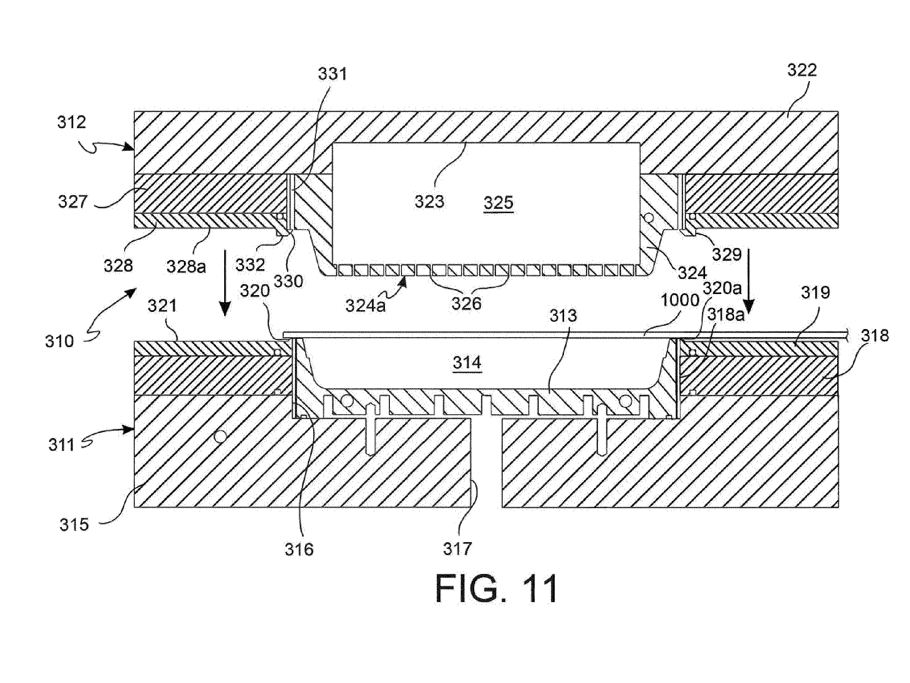

In a different embodiment, shown in the Figs. 11-12 for manufacturing the tray of Fig. 13, the method provides a forming step comprising the following steps:
a) arranging a sheet 1000 of the material of which the tray 301 is composed in a mould 310 as defined below;
b) moulding the sheet 1000 to form the tray 301 and concomitantly hot pressing a portion of the peripheral edge 304 of the tray 301 for a preset time and at a preset pressure such as to make the material of said intermediate layer 5 reaching its softening temperature and to cause the collapse of the polystyrene foam intermediate layer 5;
c) removing the tray 301 from said mould 310.

According to an embodiment, the step b) comprises moulding the sheet 1000 to form the tray 301 and the concomitant forming of a collapsed portion 309 of the peripheral edge 304 of the tray 301, wherein said collapsed portion 309 is an outer portion of the peripheral edge 304, and it is folded downwardly relative to the plane in which the peripheral edge 304 lays.

The mould 310 comprises a forming mould 311 and a counter-mould 312.

The forming mould 311 comprises a die 313 in which a cavity 314 is obtained, which reproduces the shape of the tray to be manufactured. The die 313 is interchangeable, so as to be able to adapt the mould to the different shapes and dimensions of the tray 301 that are intended to be produced.

The die 313 is housed on a support plate 315, typically in a substantially central position. To this aim, the support plate 315 has a seat 316 in which the die 313 is removably secured, for example, by means of a screw-nut system.

The support plate 315 is intended to be secured on the base of pressing machine (not shown) of a conventional type.

The support plate 315 comprises a channel 317 putting in flow communication the seat 316 with vacuum means (not shown). In turn, the die 313 comprises a plurality of holes connecting the cavity 314 to the seat 316, thus allowing the application of vacuum to the die 313 outer surface.

The support plate 315 can further comprise an inner cooling system (not shown), which can for example comprise an inner channel, for example, a coil, in which room temperature or refrigerated water is run.

An insulating material layer 318, for example a polyester/glass fiber layer, is arranged on the upper surface of the support plate 315 surrounding the seat 316.

A heating plate 319 is located above the insulating material layer 318. Such heating plate 319 comprises heating means (not shown), such as an electric resistor located therein, connected to thermostats to set the temperature at the preset value.

Along the inner perimeter of the heating plate 319, in the proximity of the die 313 edge, a lifted edge 320 is obtained, which connects to the planar outer surface 321 by an inclined surface 320a.

On the whole, the support plate 315, the insulating material layer 318, and the heating plate 319 form a housing for the die 313, so that the upper edge 313' of the die 313 is at the same height of the heating plate 319 lifted edge 320.

A profile in insulating material 318a surrounds the side walls of such housing for the die 313, so as to thermally insulate the outer side surface of the die 313.

The counter-mould 312 comprises in turn a support plate 322 intended to be mounted on the mobile part of a pressing machine (not shown) of a conventional type.

The support plate 322 can comprise, in a substantially central position, a recessed portion 323. In other embodiments, such recessed portion 323 could not be present.

A hollow punch 324 is secured on the support plate 322 - typically in the central position and, if present, about the recessed portion 323-.

The hollow punch 324 reproduces in negative the shape of the tray 301 to be manufactured, and it is arranged above the cavity 314 of the die 313 so as to match substantially thereto during the moulding step.

A chamber 325 is created between the punch 324 and the support plate 322.

The lower surface 324a of the punch 324 comprises a plurality of holes 326 putting in communication the chamber 325 with the outside. In this manner, the chamber 325 composes a buffer for the air that is displaced when the punch 324 engages the upper surface of the sheet 1000 during the moulding.

The structure of the counter-mould 312 is similar to that of the forming mould 311.

In particular, on the lower surface of the support plate 322 surrounding the recessed portion 323, a layer of insulating material 327 as defined above is arranged.

A heating plate 328 is located below the layer of insulating material 327. Such heating plate 328 comprises heating means (not shown), such as an electric resistance located therein, connected to thermostats to fix the temperature at a preset value.

Along the inner perimeter of the heating plate 328, in the proximity of the punch 324 edge, a lifted edge 329 is obtained.

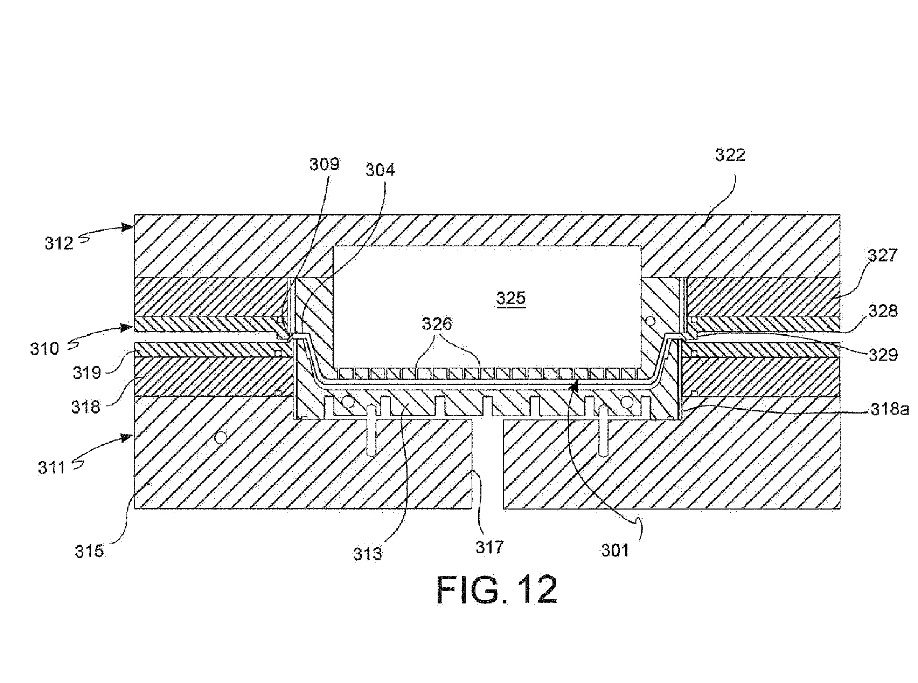

At the inner side proximal to the punch 324, the lifted edge 329 comprises a inclined surface 330 which joins it at the level of the outer surface 328a of the heated plate 328. Such inclined surface 330 is complementary to the inclined surface 320a of the lifted edge 320 in the forming mould 311, and it is intended to match thereto during the moulding step, as shown in Fig. 12.

The lifted edge 329 further comprises a planar top surface 332 intended to match with the outer surface 321 of the heating plate 319 in the forming mould 311.

A profile in insulating material 331 surrounds the side walls of the layer of insulating material 327 and of the heating plate 328, so as to thermally insulate the outer side surface of the punch 324.

In a particular embodiment, the width of the lifted edge 329 in the counter-mould 312 and of the corresponding lifted edge 320 in the forming mould 311 is dimensioned so that the area of the collapsed portion 309 of the tray 301 ranges between 20% and 40%, preferably between 25% and 35%, more preferably about 30% of the total area of the peripheral edge 304, as measured on the undercut side.

The softening or melting temperature of the material of the intermediate layer 5 typically ranges between 95° C and 110° C. Therefore, the temperature of the heating plates 319, 328, as well as the retention times under pressure of the collapsed portion 309 of the edge 304 of the tray 301 will be adjusted to obtain a quick increase of the inner temperature of the material to the values indicated above.

The pressure which the portion of peripheral edge 304 of the tray 301 is subjected to during the step b) of the method generally ranges between 40 and 90 kg/cm². However, it is not excluded that it is possible to operate outside such range, provided that the temperature of the heating plates 319, 328 is suitably adjusted. In fact, too high a temperature in the presence of a high pressure could lead to a breakage of the peripheral edge 304 in the contact point. Vice versa, by operating with low pressures and low temperatures, a suitable collapse of the material would not be obtained, hence sealing functional to the object of the invention could not be obtained. If, in fact, the material of the intermediate layer 5 does not suitably collapse, its tightness to the gas passage along the edge is compromised.

Generally, the temperature of the heating plates 319, 328 will range between 110° C and 150° C, preferably between 130° C and 140° C; while the pressing time will range between 1 and 6 seconds, preferably 3-4 seconds.

In an embodiment, the surface of the heating plates 319, 328 is coated with a non-adherent material, for example, teflon, at least in the portion intended to contact the peripheral edge 304 of the tray 301.

In an embodiment, during the moulding step b), the drilling of the tray bottom will be able to be obtained. According to this embodiment, the punch 324 will have on its lower surface a series of needles (not shown) for drilling the tray.

In other embodiments, the drilling of the tray will be performed in a successive step, by means of a special drilling punch.

In an embodiment, the tray 301 cutting from the sheet 1000 may take place together with the moulding step b), while in other embodiments, it will occur downstream.

During the step b) of the method described above, the counter-mould 312 is lowered on the sheet 1000 that has been pre-softened by heating. Concurrently, a suction through the holes of the die 313 of the forming mould 311 is applied, so as to promote a modeling of the tray 301 in the die 313 itself.

When the counter-mould 312 is completely lowered on the sheet 1000, the punch 324 completes the forming of the tray 301, while the lifted edges 320, 329 of the two opposite heating plates 319, 328 cause the thermosealing of the tray edge 304 and the concomitant forming of the collapsed portion 309 folded downwardly. This occurs by virtue of the presence of the inclined surface 330 present on the counter-mould 312, matching with the respective inclined surface 320a present on the forming mould 311.

The insulating material layers 318, 327 and the insulating profiles 318a, 331 that are present on both the forming mould 311 and on the counter-mould 312 avoid heating the support plates 315, 322, the die 313, and the punch 324. In fact, it is crucial that these parts remain cold throughout the formation of the tray 301, so as to cause the solidification thereof, hence the final forming of the product.

The fact that the collapsed portion 309 is folded downwardly has a double advantage.

First of all, it avoids that, upon cutting the tray from the sheet of material from which the blade has been obtained, such blade may cut the collapsed portion 309. In fact, it is necessary to bear in mind that the cutting profiles of the trays from the sheet have standard dimensions being sized for trays provided with a conventional peripheral edge 304. Considering that in the present invention the width of the peripheral edge 304 has been increased as described above, the additional portion- corresponding to the collapsed portion 309 - would risk to be cut. Vice versa, the fact that such collapsed portion 309 is folded downwardly, together with the material flexibility, allows the blade sliding.

Folding the collapsed portion 309 resolves also the problem of a not very efficient welding of the protective film that will be applied by the end used upon packaging the product, which problem is instead highlighted with the trays of the state of the art. In fact, the collapsed portion 309, being folded downwardly, does not interfere with the protective film overlaying.

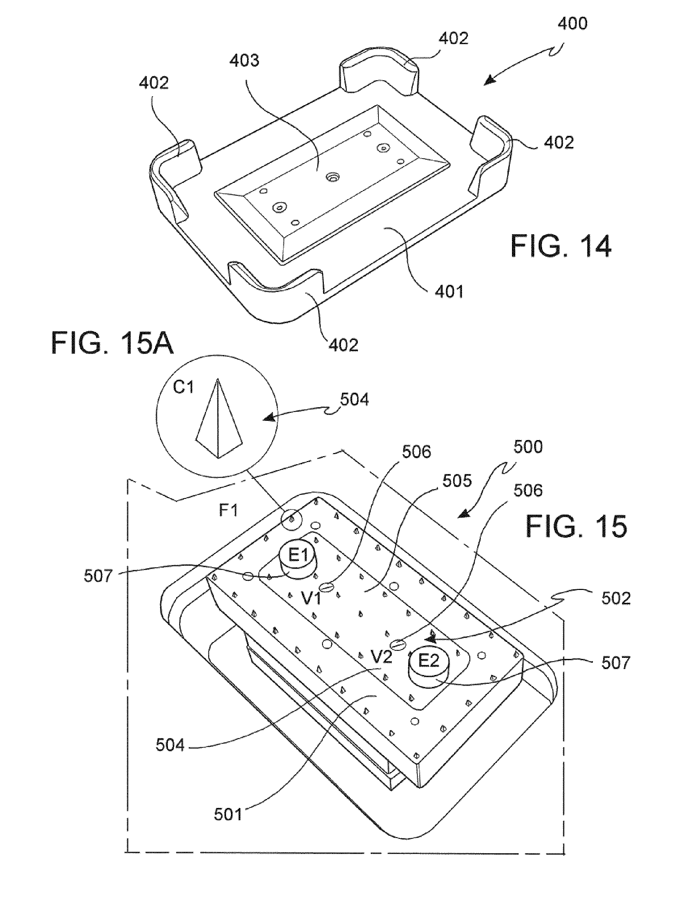

In some embodiments, the support mould 10 of the Figs. 5-6 or the forming mould 311 of the Figs. 11-12 can comprise a centering means 400, shown in Fig. 14.

The centering means 400 comprises a bottom plate 401 from which angled members 402 extend upwardly, which are arranged at the four corners of the bottom plate 401. The angled members 402 joint two by two the perpendicular sides of the bottom plate 401 and are L-shaped with a rounded vertex, so as to reproduce the shape of the tray to be molded.

The bottom plate 401 has rectangular shape, and has a thrust plaque 403 in the central position thereof.

In some embodiments, the thrust plaque 403 is composed of a lifted portion of the surface of the bottom plate 401 and reproduces the shape of such plate, but with reduced dimensions, so that the respective long sides and short sides are substantially mutually parallel.

The centering means 400 allows keeping the tray perfectly centered within the mould 10, 311 during the pressing step of the portion of peripheral edge 4, 304 to be sealed. The thrust plaque 403, reproducing the tray bottom, acts so as to transmit a counter-thrust that tends to widen the tray sides, in particular the long sides, to compensate the shrinkage effect caused by the heat tending to deform the side inwardly. If fact, should this occur, a complete sealing of the peripheral edge 4, 304 could not be obtained, since a portion of such edge, in particular at the central part of the long side, would reenter within the mould, thus not being pressed, or being only partially pressed.

In some embodiments, it will be possible to adjust the height of the centering means 400 within the mould 10, 311 according to the needs, for example, by suitable spacers (not shown) that are arranged between the mould surface and the centering means 400.

In some embodiments, the press plate 11 of Fig. 6 or the counter-mould 312 of the Figs. 11-12 comprise drilling means 500 for the tray bottom. Such drilling means 500 allow arranging a plurality of draining holes in the bottom of the tray putting in communication the weldable material outer layer 8 with the open-cell polystyrene foam intermediate layer 5.

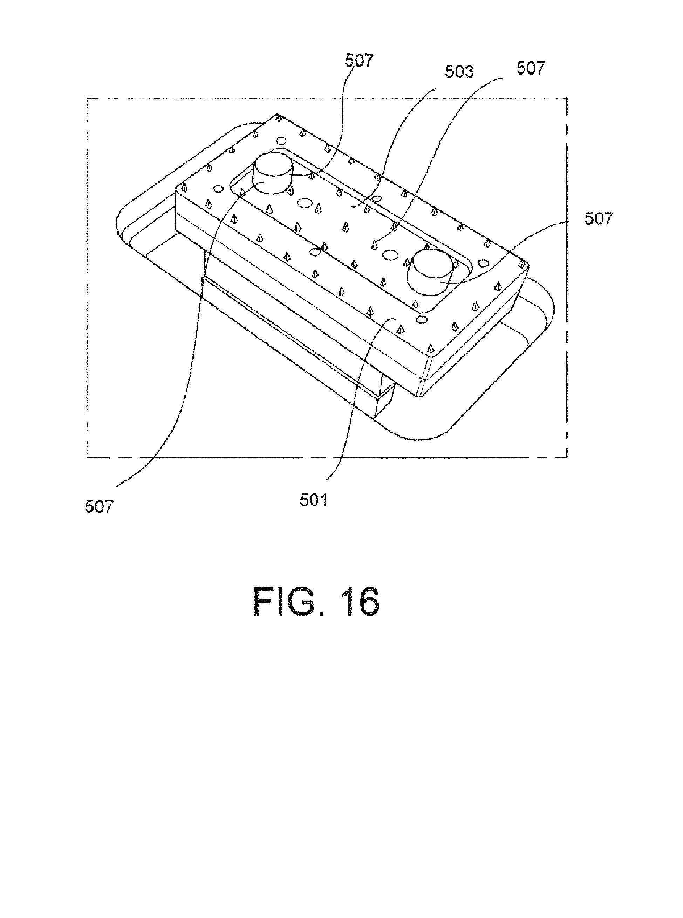

With reference to the Figs. 15 and 16, the drilling means 500 comprise a plate 501 on which a plurality of drilling tips 504 is arranged, and having a central portion 502 with an adjustable height. The central portion 502 comprises to this aim a recessed surface 503 (Fig. 16) determining a seat for a filling plaque 505 and comprising in turn a plurality of drilling tips 504. The filling plaque 505 has on its upper face (visible in the Figure) a plurality of drilling tips 504, while the lower face, opposite thereto, has holes (not visible) to house the drilling tips 504 that are present on the recessed surface 503.

The filling plaque 505 is removable from its seat on the plate 501 by virtue of a removable securing means 506, for example, one or more securing screws.

According to the needs, the filling plaque 505 will be able to be removed so as to create a central drilling portion at a height that is lower than the plate 501 surface, corresponding to the recessed surface 503. This measure will be able to be adopted when the tray being processed has a convex bottom, which would cause the formation of through holes on its bottom, thus nullifying the tightness of the tray to both liquids and gases. In such cases, therefore, it will be useful to retract the drilling tips 504 at said central portion, which is implemented exactly making the recessed surface 503 operative. It will also be possible to change the level of the recessed surface 503 by using filling plaques 505 with a different thickness.

The plate 501 comprises tray release means 507. The release means 507 comprise at least one retractile member (in the Figure, two retractile cylinders are shown), slidably housed in a suitable seat of the plate 501. Elastic means (not visible) acting on the bottom of said seat allow the retractile member 507 coming back to the extended position, pushing the tray bottom so as to promote the release thereof from the press plate 11 or from the counter-mould 312, after the pressing and sealing of the peripheral edge 4, 304 of the tray.

The filling plaque 505 will comprise a through hole aligned with said at least one retractile member 507, so as to make it to emerge from the surface of the central portion 502 of the plate 501.

In some embodiments, the drilling tips 504 have a pyramidal shape. This solution, unlike the one having a conical structure, has cutting edges that also perform a cutting action on the material and not only a drilling action, improving the draining capability of the drilled surface.

It shall be apparent that those of ordinary skill in the art will be able to make a number of modifications to the invention, without anyhow departing from the protection scope defined by the claims appended herein below.

For example, the apparatus for thermosealing the edge of the tray that is the object of the present invention can also be inserted in line in an extrusion plant of a multilayered sheet for manufacturing the above-mentioned trays, making adaptations to said plant that are within the scope of those skilled in the art.

## Claims

1. A method for sealing the peripheral edge (4) of a food tray (1), said tray (1) comprising an open-cell polystyrene foam intermediate layer (5) and at least one outer weldable material layer (8), said method comprising a first pressurized thermosealing step, followed in sequence by a second pressurized cooling step, wherein said first pressurized thermosealing step comprises the following steps:
a) arranging the tray (1) in a heated support mould (10);
b) compressing a portion of the peripheral edge (4) by a press plate (11) heated for a preset time and at a preset pressure such as to make the material of said intermediate layer (5) reach its softening or melting temperature;
c) removing the tray (1) from said support mould (10),
and wherein said second pressurized cooling step is carried out immediately after the pressurized thermosealing step and comprises the following steps:
a1) arranging the tray (1) that underwent said first pressurized thermosealing step in a cooling mould (10');
b1) cold pressing the peripheral edge (4) of the tray (1) for a preset time and at such a pressure as to quickly cooling and stretching said peripheral edge (4);
c1) removing said tray (1) from said cooling mould.

2. The method according to claim 1, wherein the pressure which the portion of peripheral edge (4) of the tray (1) is subjected to during the step b) ranges between 40 and 90 kg/cm² , and the temperature of said mould (10) ranges between 110° C and 150°C, and wherein the sealing time ranges between 1 and 6 seconds; and wherein the pressure which the peripheral edge (4) is subjected to during the step b1) ranges between 10 and 40 kg/cm², and the pressurized treatment time ranges between 1 and 5 seconds.

3. The method according to claim 1 or 2, wherein the temperature of said mould (10) in step b) ranges between 130° C and 140° C, and the sealing time ranges between 3 and 4 seconds, and wherein the pressure which the peripheral edge (4) is subjected to during the step b1) ranges between 20 and 30 kg/cm², and the pressurized treatment time ranges between 2 and 3 seconds.

4. A pressurized thermosealing apparatus (100, 200) the peripheral edge (4) of a food tray (1) by the method according to any of the claims 1 to 3, said tray (1) comprising an open-cell polystyrene foam intermediate layer (5) and at least one outer weldable material layer (8), the apparatus comprising at least one first operative mould-pressing unit composed of a heated support mould (10) and a heated press plate (11), wherein said heated support mould (10) comprises an upper surface (14), intended to support the peripheral edge (4) of the tray (1), and a cavity (15), intended to house the remaining part of the tray (1), and wherein the support mould (10) or the press plate (11) comprise a compression profile (12, 13, 13') suitable to compress from the bottom or from the top a portion of the peripheral edge (4) of said tray (1) so as to create a collapsed portion (9) of said peripheral edge (4), **characterized in that** it comprise at least one second operative mould-pressing unit composed of a cooled support mould (10') and a corresponding press plate (11'), said at least one second operative unit being arranged immediately downstream, along the treatment path of said tray (1), of said at least one first operative unit.

5. The apparatus (100, 200) according to claim 4, wherein said heated support mould (10) comprises a bevel (18) at the edge between the upper surface (14) and the cavity (15).

6. The apparatus (200) according to claim 4 or 5, comprising a pair of loading stations (201, 201') of the trays (1), a pair of hot mould-pressing stations (202, 202'), a pair of cold mould-pressing stations (203, 203') and a pair of unloading stations (204, 204'), so as to define two parallel treatment paths of the trays (1), wherein:
- each of the loading stations (201, 201') comprises a plurality of indents (206), each indent (206) being dimensioned to house a tray (1);
- each of the hot mould-pressing stations (202, 202') comprises a table (207) on which a plurality of heated support moulds (10) is arranged, connected to respective heating means;
- each of the cold mould-pressing stations (203, 203') comprises a table (208) on which a plurality of support moulds (10') is arranged, connected to respective cooling means,
wherein said tables (207, 208) of each pair of said mould-pressing stations (202, 202', 203, 203') are mounted on respective slides allowing the transversal movement thereof relative to said treatment paths of the trays (1),
the apparatus (200) further comprising:
- fixed pressing means (209, 210) arranged in an intermediate position between the two tables (207, 208) of each of the pairs of mould-pressing stations (202, 202', 203, 203'), each of said pressing means (209, 210) comprising a plurality of press plates (11, 11') respectively;
- first and second handling means (211, 211') of the trays (1).

7. The apparatus (200) according to claim 6, wherein said handling means (211, 211') are mobile along the treatment path of the trays (1) and can be translated vertically between a spaced position relative to the trays (1) in the support moulds (10, 10') and a contact and gripping position of said trays (1), the handling means (211, 211') comprising a plurality of gripping members (215) for said trays (1).

8. The apparatus (200) according to claim 7, wherein said gripping members (215) are composed of at least one tubular element (216) connected to vacuum means by a suitable pipe (217), wherein each tubular element (216) ends at its lower end with a bell (218) intended to contact the bottom (2) of a tray (1), said tubular element (216) being further retractile and returnable to the extended position by respective elastic means (219).

9. A food tray (1) comprising a bottom (2), containment side walls (3), extending upwardly from the bottom (2), and a peripheral edge (4) extending outwardly from the upper end of the side walls (3), on a plane substantially parallel to the plane of the bottom (2), said tray (1) being made of a multilayered material comprising an open-cell polystyrene foam intermediate layer (5) and at least one outer weldable material layer (8), **characterized in that** the peripheral edge (4) comprises a collapsed portion (9) obtained by thermosealing, said collapsed portion (9) being an outer portion of the peripheral edge (4) folded downwardly.

10. The tray (1) according to claim 9, wherein said collapsed portion (9) has a thickness ranging between 0.3 and 0.7 mm, or between 0.4 and 0.6 mm, and an area ranging between 20% and 40%, or between 25% and 35%, or about 30% of the total area of the peripheral edge 4, as measured on the undercut side, and wherein the peripheral edge (4) has a width ranging between 9 and 11 mm, or about 10 mm, as measured on the undercut side.

11. The tray (1) according to claim 9 or 10, wherein said tray (1) is made of a multilayered material comprising an intermediate layer (5) of open-cell polystyrene foam, on the two faces of which:
- a layer (6) of a material compatible with said polystyrene foam layer, preferably non-foamed polystyrene;
- a layer (7) of a material with gas barrier properties, arranged in contact with said layer (6) of material compatible with polystyrene foam, preferably ethylene vinyl alcohol (EVOH);
- an outer layer (8) of weldable material arranged in contact with said layer (7) of a material with barrier properties, the weldable material being selected preferably from polyethylene (PE), polypropylene (PP) and high density polyethylene (PEHD)
are arranged.

12. A mould (10) for manufacturing the tray (1) according to any of the claims 9 to 11, said mould (10) comprising a forming mould (11) and a counter-mould (12), wherein the forming mould (11) comprises a die (13) in which a cavity (14) is obtained, which reproduces the shape of the tray (1) to be manufactured, and the counter-mould (12) comprises a punch (24) that reproduces in negative the shape of said tray (1), **characterized in that** both the forming mould (11) and the counter-mould (12) comprise respective heating plates (19, 28) arranged on a peripheral portion of the forming mould (11) and of the counter-mould (12), said heating plates (19, 28) comprising along the inner perimeter respective lifted edges (20, 29), wherein said lifted edges (20, 29) have inclined surfaces (20a, 30) intended to match when the mould (10) is closed.

13. The mould (10) according to claim 12, wherein the die (13) is housed on a support plate (15), the support plate (15) comprising a seat (16) in which the die (13) is secured, and wherein the support plate (15) comprises a channel (17) putting into flow communication the seat (16) with vacuum means and the die (13) comprises a plurality of holes connecting the cavity (14) to the seat (16) and allowing the application of vacuum to the outer surface of the die (13), and wherein the support plate (15) comprises an internal cooling system.

14. The mould (10) according to claim 12 or 13, wherein an insulating material layer (18) is arranged on the upper surface of the support plate (15) surrounding the seat (16), said insulating material layer (18) being sandwiched between said support plate (15) and said heating plate (19), said mould (10) further comprising an insulating material profile (18a) surrounding the side walls of the die (13), so as to thermally insulate the outer side surface of the die (13); and wherein the counter-mould (12) comprises a support plate (22), a layer of insulating material (27) being arranged on a peripheral portion of the lower surface of the support plate (22), said insulating material layer (27) being sandwiched between said support plate (22) and said heating plate (28).

15. The mould (10) according to claim 14, wherein said punch (24) is secured on said support plate (22), said punch (24) being hollow, so as to form between said support plate (22) and said punch (24) a chamber (25) acting as an air buffer, the lower surface (24a) of the punch (24) comprising a plurality of holes (26) putting in communication the chamber (25) with the exterior; and wherein said mould (10) comprises an insulating material profile (31) surrounding the side walls of the insulating material layer (27) and of the heating plate (28) of the counter-mould (12), so as to thermally insulate the outer side surface of the punch (24).

16. The method for manufacturing a tray (1) according to any of the claims 9 to 11, comprising a forming step comprising the following steps:
a) arranging a sheet (100) of the material of which the tray (1) is composed in a mould (10) as defined in any of the claims 5 to 15;
b) moulding the sheet (100) to form the tray (1) and concomitantly hot pressing a portion of the peripheral edge (4) of the tray (1) for a preset time and at a preset pressure such as to make the material of said intermediate layer (5) reach its softening temperature and to cause the collapse of the polystyrene foam intermediate layer (5);
c) removing the tray (1) from said mould (10).

17. The method according to claim 16 or according to any of the claims 1 to 3, comprising drilling the bottom (2) of the tray (1) concomitantly to said step b) or a said step b1), respectively, so as to form the draining holes.

18. The press plate (11) according to any of the claims 4 to 8, or the counter-mould (312) according to any of the claims 12 to 15, wherein the press plate (11) or, respectively, the counter-mould (312) comprise drilling means (500) of the bottom of the tray, wherein the drilling means (500) comprise a plate (501) on which a plurality of drilling tips (504) is arranged and having a central portion (502) with an adjustable height, said central portion (502) comprising a recessed surface (503) that defines a seat for a filling plaque (505) and comprising in turn a plurality of drilling tips (504), wherein the filling plaque (505) is removably secured to said recessed surface (503).

19. The press plate (11) or counter-mould (312) according to claim 18, wherein the plate (501) comprises release means (507) of the tray, said release means (507) comprising at least one retractile member, slidably housed in a suitable seat of the plate (501), wherein elastic means acting on the bottom of said seat allows the retractile member (507) going back to its extended position.

20. The press plate (11) or counter-mould (312) according to claim 18 or 19, wherein the drilling tips (504) have a pyramidal shape.

21. The mould (10, 311) according to any of the claims 4 to 8 and 12 to 15, comprising a centering means (400), wherein the centering means (400) comprises a plate of bottom (401) from which angled elements (402) extend upwardly, which are arranged at the four corners of the bottom plate (401), so as to join two by two the perpendicular sides of the bottom plate (401); wherein the bottom plate (401) has in the central position a thrust plaque (403), said thrust plaque (403) being composed of a lifted portion of the surface of the bottom plate (401).
